(19) Europäisches Patentamt
European Patent Office
Office européen des brevets

(11) Publication number: **0 248 257 A2**

# (12) EUROPEAN PATENT APPLICATION

(21) Application number: 87107175.9

(22) Date of filing: 18.05.87

(51) Int. Cl.³: C 01 B 25/30

(30) Priority: 04.06.86 IL 79019

(43) Date of publication of application: 09.12.87 Bulletin 87/50

(84) Designated Contracting States: DE ES FR GB IT NL

(71) Applicant: HAIFA CHEMICALS LTD.
Haifa-Bay P.O. Box 1809
Haifa 31018(IL)

(72) Inventor: Manor, Shalom, Dr.
39 Harishonim Street
Kiryat-Haim(IL)

(72) Inventor: Pipko, Grigori, Dr.
28/22 Klebanov Street
Haifa(IL)

(72) Inventor: Langham, Adrian
39a Einstein Street
Haifa(IL)

(72) Inventor: Friedman, Nitza
6 Ben-Gurion Avenue
Kiryat-Bialik(IL)

(72) Inventor: Steiner, Amalia
29 Netiv Hen Street
Haifa(IL)

(74) Representative: Rottmann, Maximilian R.
c/o Rottmann, Quehl & Zimmermann AG Glattalstrasse 37
CH-8052 Zürich(CH)

## (54) Process for the manufacture of Monopotassium Phosphate.

(57) The present invention relates to a process for the manufacture of monopotassium phosphate using solvent extraction technique. According to the invention, the reaction occurs between phosphoric acid and potassium chloride at a temperature between 0 and 100 degrees C. in the presence of an organic solvent comprising long chain primary, secondary or tertiary amine, each chain containing between 6 and 28 carbon atoms. The lower phase containing the monopotassium phosphate is cooled by at least 10 degrees less than the reaction temperature whereby pure crystals of monopotassium phosphate are separated and removed. The upper phase which contains the organic solvent, amine-hydrochloric acid as well as most of the impurities originally present in the starting reagents, is treated with a base at a temperature in the range of 20 to 100 degrees C. whereby the amine is regenerated and recycled to the process. Typical examples of suitable bases are calcium oxide, calcium carbonate or mixtures thereof. The monopotassium phosphate obtained is characterized by its high purity.

EP 0 248 257 A2

## BACKGROUND OF THE INVENTION

The present invention relates to a new process for the manufacture of monopotassium phosphate. More particularly, the present invention relates to a new process for the manufacture of monopotassium phosphate using the raw material KCl as a source of potassium.

The direct neutralization of phosphoric acid by potassium hydroxide or carbonate is readily seen to be uneconomic, if the product is to be used as a fertilizer and therefore most of the known methods are based on the utilization of potassium chloride as starting material.

The known methods for the manufacture of monopotassium phosphate, from phosphoric acid and potassium chloride, are based on the thermal reaction between the two reagents in which the following reaction occurs :

$$H_3PO_4 + KCl \longrightarrow KH_2PO_4 + HCl.$$

However the yield of the said reaction is poor unless a large excess of phosphoric acid is used, in which case the solid product obtained is a double salt: $KH_2PO_4.H_3PO_4$ which requires a further step for its decomposition and recovery of the excess of phosphoric acid. A further drawback in the thermal process is the need for pure starting

materials, as all impurities present in the feed potassium chloride and phosphoric acid are carried through to the solid product. Lastly, the thermal process requires temperatures above 160 degrees C, which cause problems of corrosion and could lead to the formation of insoluble potassium metaphosphate, unless special precautions are taken such as that proposed in the U.S. Patent Number 3,393,044 wherein organic substances are added to the reaction mixture so as to expel the hydrogen chloride at a lower temperature. However, even with that improvement the reaction temperature remains in the range of 120 to 160 degrees C, so that the corrosion problems remain.

Another approach for the manufacture of monopotassium phosphate at ambient temperature, was described in the U.S. Patent No. 2,902,341 (Baniel et.al.), wherein potassium chloride is reacted with large excess of phosphoric acid and the mixture of hydrochloric acid (resulted in the reaction) and the excess of phosphoric acid are removed by solvent extraction using water immiscible organic solvents. The monopotassium phosphate is crystallized from the aqueous solution resulting after the removal of the acids. The implementation of this process on a commercial scale is questionable, particularly in view of the high costs involved concerning the organic solvents and energy required to separate phosphoric acid from the hydrochloric acid.

According to U.S. Patent No. 3,661,513 a process is disclosed for the manufacture of monopotassium phosphate from phosphoric acid and potassium chloride, wherein the reaction mixture is treated with an immiscible secondary amine to selectively extract the chloride ion. The solution recovered has a reduced anion content and a pH of about 7. On evaporating the so-treated phosphate solution, solid monopotassium phosphate can be recovered. The advantage mentioned to exist in this method is that the product is substantially free of contaminating anions without the use of the high temperatures mentioned by the prior art.

## SUMMARY OF THE INVENTION

It is an object of the present invention to provide a simple process for the manufacture of monopotassium phosphate. It is another object of the present invention to provide a simple process for the manufacture of monopotassium phosphate without employing the relatively high temperatures required in the most of the prior art methods, thus avoiding completely the danger of metaphosphate production. Thus, the invention consists of a process for the manufacture of monopotassium phosphate which comprises the steps of: (a) reacting phosphoric acid with potassium chloride, in the presence of an organic solvent comprising long chain primary, secondary or tertiary amine, each chain having between 6 and 28 carbon atoms, at

a temperature in the range of between 0 and 100 degrees C; (b) separating the aqueous lower phase comprising the monopotassium phosphate; and (c) cooling the separated phase obtained in step (b) by at least 10 degrees less than the reaction temperature used in step (a), whereby substantially pure crystals of monopotassium phosphate are separated and removed. The upper layer which contains the organic solvent, amine-hydrochloric acid and impurities originally present in the starting reagents, is treated with a base, and especially from the economic point of view with a calcium constituent selected from calcium oxide, calcium carbonate or mixtures thereof, whereby the amine is regenerated and recycled to the process. This regeneration is carried out generally at a temperature in the range of between 20 to 100 degrees C. Particularly, the regeneration with calcium carbonate, reagent known by its abundancy and relatively low cost, is preferred, the temperature in this case being in the range of between 60 to 100 degrees C.

The invention is based on the discovery that by conducting the first step of the process, whereby phosphoric acid reacts with potassium chloride in the presence of an organic solvent containing said amine, at a selected temperature in the range of between 0 and 100 degrees C, avoiding formation of crystals, it is possible to

obtain with high recovery crystals of monopotassium phosphate upon cooling the separated aqueous phase by at lease 10 degrees C, and preferably between 30 and 60 degrees below the reaction temperature.

## DESCRIPTION OF THE INVENTION

The reaction between the phosphoric acid and the potassium chloride, in the presence of the organic solvent containing the above mentioned groups of amines, goes smoothly to its completion according to the reaction mentioned on page 1. The hydrogen chloride produced thereto, will combine with the amine producing the corresponding amine-hydrochloric acid. The ratio between the phosphoric acid and potassium chloride is not critical, but it is preferred to utilize a substantial equimolar ratio, since any excess of phosphoric acid will be extracted by the amine.

The phosphoric acid to be reacted with the potassium chloride, can come from any convenient source and its composition can vary over a rather substantial range. The wet process phosphoric acid (also called green acid or merchant acid or fertilizer acid) is particularly suitable, the impurities being removed in-situ during the reaction with potassium chloride, passing into the amine-hydrochloric salt. The concentration of phosphoric acid can similarly vary over a considerable range; thus it can range from

as low as about 5% to about 62% by weight $P_2O_5$. A 5% concentration is somewhat diluted and requires additional processing to concentrate it. Phosphoric acid with a $P_2O_5$ concentration above 62% is not readily available and although useful for the process according to the present invention is not preferred. It is generally preferred to employ a phosphoric acid having a concentration of from about 20% to 40% by weight $P_2O_5$. In this range of concentration the agitation of the reagents is also optimal.

The potassium chloride should be added as a concentrated solution and preferably in a solid form, to minimize the presence of water which might interfere with the crystallization process of monopotassium phosphate.

The organic solvent, consists of primary, secondary or tertiary amine containing between 6-28 carbon atoms in each chain.The amines are generally aliphatic in character, although they may be partially aromatic. The aliphatic hydrocarbon groups can be straight, chained or branched chained, saturated or unsaturated, and the hydrocarbon chains (one, two or three) need not necessarily be identical. The amine or amines selected should be liquid, stable and of low volatility at ambient temperature, and both, the amine and its salt

should be insoluble in water. It is therefore seen that a variety of amines fall within the scope of the present invention, but the preferred type are the amines containing between 8-18 carbon atoms, in each chain, which are also commercially available under the name Alamine 336 (Trade Mark, produced by Henkel) or Adogen 364 (Trade Mark, produced by Sherex, U.S.A.).

A variety of inert organic solvents will normally be compatible to dissolve the amine (and its hydrochloric salt), so the choice of diluent is wide. The diluent, or combination of diluents, should be immiscible with water and should be sufficiently different in density from water and from aqueous solutions of potassium phosphates so that no difficulty will arise in phase separation. In particular suitable inert solvents are aliphatic and aromatic hydrocarbons, most preferable being kerosene, alcohols and ketones.

The ratio between the amine and the inert solvent is not critical and can be selected in a broad range of between 5% to 99% (amine to inert solvent), the most preferred range being between 20% to 70%.The amount of amine, should be at least equivalent to the resulted hydrochloric acid from the reaction between phosphoric acid and potassium chloride in order to form the corresponding amine-hydrochloric salt.

The temperature for carrying out the reaction between the phosphoric acid and potassium chloride (in the presence of the organic solvent) may be selected in a broad range of between 0 and 100 degrees C. Temperatures above 100 degrees should be avoided in order not to involve volatilization. The most preferred range of temperatures for carrying out the reaction is between 60 and 95 degrees C. The temperatures at the upper range, will enable an easy separation between the two phases: organic and aqueous phase. Of course it is possible to utilize also lower reaction temperature (below 60 degrees C), inducing the phase separation by other means as known in the art. However it should be borne in mind that the crystals of monopotassium phosphate are obtained by cooling the separated aqueous phase by at least 10 degrees, and when low temperatures will be utilized, particular conditions of cooling should be imposed in said plant. A person skilled in art will selcct the proper temperature for the reaction, in the claimed range of the process, according to the availibility at site.

It was also found that by carrying out the reaction between the phosphoric acid and potassium chloride at the preferred temperature range of between 60 to 90 degrees C, the two phases which are obtained are free from any crystals.

One of the advantages of the process is the easy separation of the monopotassium phosphate from the aqueous phase removed from the reactor. Whereas this separation occurs from an aqueous phase, which is substantially free from the organic solvent, said crystals will be substantially pure consisting of monopotassium phosphate with small amount or traces of potassium chloride, according to the extent of reaction obtained in step (a). Generally, the amount of $Cl^-$ in the monopotassium phosphate will be below 3%. After separating the crystals of monopotassium phosphate, the resulted mother liquor is recycled to the reaction so that substantially no losses of $P_2O_5$ and $K_2O$ values are involved in the process.

As known from the solvent extraction technique which utilizes amines, such as in the extraction of phosphoric acid, the incorporation of various additives to induce the phase separation or to avoid emulsion problems, may also be utilized in the process according to the present invention. Well-known reagents useful for this extraction are long chain alcohols such as decanol or dodecanol, and small amounts in the range of between 2-15% by weight of the organic solvent are suggested.

While the invention will now be described in connection with certain preferred embodiments in the following Examples, it will be understood that it is not intended to limit the

present invention to these particular embodiments. On the contrary, it is intended to cover all alternatives, modifications and equivalents as may be included within the scope of the invention as defined by the appended Claims. Thus the following Examples which include preferred embodiments will serve only to illustrate the practice of this invention, it being understood that the particulars described are by way of example, without being limited thereto.

In the Examples given below, the figures are expressed in weight precentages unless otherwise stated.

**EXAMPLE 1.**

The following reagents were introduced into a glass reactor provided with a stirrer:

- 7.5 g of potassium chloride (solid) 95% KCl, produced by Dead Sea Works Ltd. Israel.
- 32.7 g of phosphoric acid (green acid) 21.7% $P_2O_5$, produced by Rotem, Israel.
- 84 g of a mixture consisting of 42 g tertiary amine (Alamine 336, produced by Henkel, U.S.A.) in 34 g of dearomatized kerosene (Desol, produced by Sonol, Israel) and 8 g of dodecanol (produced by Merck, West-Germany).

The above reaction mixture was agitated for about 60 minutes at 60 degrees C. After the agitation was ceased, two clear phases appear: an upper organic phase, and a lower aqueous phase. The aqueous phase was separated and cooled to about 8 degrees C, whereby 11.6 g crystals of monopotassium phosphate separated out having the following compositions:

- 46.2% $P_2O_5$ - 1.5% $Cl^-$
- 30.6% $K_2O$ - 8.1% $H_2O$

**EXAMPLE 2.**

The experiment as in Example 1 was repeated, using the same reaction conditions and the same amounts of phosphoric acid and potassium chloride. In this case, the organic solvent consisted of 45 g of primary amine (Amine 81R, produced by Rohm & Haas, U.S.A.) and 45 g of dearomatized kerosene (Desol, as in the previous Example). The crystals separated from the aqueous phase amounted to 7.2 g and had the following composition:

- 39.8% $P_2O_5$ - 2.1% $Cl^-$
- 29.1% $K_2O$ - 19.1% $H_2O$

EXAMPLE 3.

The experiment as in Example 1 was repeated, using the same reaction conditions and the same amounts of phosphoric acid and potassium chloride. In this case, the organic phase consisted of 50 g of primary amine (Primene JMT, Trade Mark produced by Rohm & Haas) and 50 g of dearomatized kerosene (Desol).

The crystals separated from the aqueous phase amounted to 10.8 g and had the following composition:

| | |
|---|---|
| - 47.3% $P_2O_5$ | - 1.0% $Cl^-$ |
| - 32.4% $K_2O$ | - 7.8% $H_2O$ |

EXAMPLE 4.

The experiment as in Example 1 was repeated, using the same reaction conditions and same amounts of phosphoric acid and potassium chloride. In this case, the organic solvent consisted of 34 g of tertiary amine (Adogen, 364, Trade Mark, produced by Sherex, U.S.A.) having 8 to 10 carbon atoms in each chain, 34 g of dearomatized kerosene (Desol) and 8 g of dodecanol.

The crystals separated from the aqueous phase amounted to 11.8 g and had the following composition:

- 48.3% $P_2O_5$ - 3.6% $H_2O$
- 34.2% $K_2O$ - 1.7% $Cl^-$

EXAMPLE 5.

The experiment as in Example 1 was repeated, using the same reaction conditions and the same amounts of phosphoric acid and potassium chloride. In this case the organic solvent consisted of 46 g of a secondary amine having 12 to 14 carbon atoms in each chain (Amine LA-2, produced by Rohm & Haas) dissolved in 46 g of amyl alcohol.

The crystals separated from the aqueous phase amounted to 7.9 g and had the following composition:

- 34.6% $P_2O_5$ - 26.2% $H_2O$
- 27.5% $K_2O$ - 2.5% $Cl^-$

EXAMPLE 6.

The same reactor as in Example 1 was utilized, with the following amounts of reagents (the sources of the reagents were the same as in Example 1):

223.5 g of phosphoric acid of 27.1% $P_2O_5$; 54.1 g of potassium chloride; 300 g of Alamine 336; 300 g of dearomatized kerosene

and 35 g of dodecanol.

The reaction mixture was agitated for about 60 minutes at 90 degrees C. After separating out the aqueous phase, it was cooled at about 50 degrees C, whereby an amount of 69 g of crystals separated out having the following composition:

- 46.5% $P_2O_5$
- 8.5% $H_2O$
- 32.1% $K_2O$
- 1.0% $Cl^-$

**EXAMPLE 7.**

The mother liquor (350 mls, 264 g/l $P_2O_5$ and 15.8 g/l $Cl^-$ and 15.8 g/l $SO_4^-$) obtained in the experiment described in Example 6, was utilized together with the following reagents:

223.5 g of phosphoric acid (21.7% $P_2O_5$); 54.1 g of potassium chloride (95% KCl). The organic solvent was the same as in Example 6 (amounts and composition). The same reaction conditions as in Example 6, were maintained in this case.

An amount of 128.6 g of crystals separated out from the aqueous phase having the following compositions:

- 41.5% $P_2O_5$
- 28.9% $K_2O$
- 17.9% $H_2O$
- 1.1% Cl

**EXAMPLE 8.**

The experiment described in Example 6, was repeated for twenty cycles, in each cycle the mother liquor obtained in a previous experiment, being utilized. The same reaction conditions and reagents amounts as used in said Example were finally added. An amount of 166.3 g of crystals separated out from the aqueous phase having the following composition:

- 47.6% $P_2O_5$
- 33.2% $K_2O$
- 6.5% $H_2O$
- 1.5% $Cl^-$

**EXAMPLE 9.**

This example illustrates the regeneration of amine. An amount of 84 g of organic solvent resulted after the reaction, containing 3.9% $Cl^-$ was mixed with 9.5 of natural limestone (84% $CaCO_3$) and 90 ml of water and heated at 98 degrees C for about 60 minutes. The chloride content of the solvent decreased to 0.06%. The organic solvent with the regenerated amine, was recycled to the process.

CLAIMS :-

1. A process for the manufacture of monopotassium phosphate which comprises the steps of :-

(a) reacting phosphoric acid with potassium chloride, in the presence of an organic solvent comprising long chain primary, secondary or tertiary amine having between 6 and 28 carbon atoms in each chain, at a temperature range of between 0 and 100 degrees C;

(b) separating the aqueous lower phase comprising the monopotassium phosphate; and

(c) cooling the separated phase obtained in step (b) by at least 10 degrees C below the reaction temperature used in step (a), whereby substantially pure crystals of monopotassium phosphate are obtained.

2. A process according to Claim 1, wherein the temperature of the reaction in step (a) is between 60 and 95 degrees C.

3. A process according to Claims 1 or 2, wherein the lower phase separated in step (b) is cooled at a temperature of 30 to 60 degrees C below the reaction temperature used in step (a).

4. A process according to Claims 1 to 3, wherein the long chain primary, secondary or tertiary amine is dissolved in an inert organic solvent.

5. A process according to Claim 4, wherein said inert organic solvent is selected from aliphatic and aromatic hydrocarbons, alcohols, and ketones.

6. A process according to Claims 1 to 5, wherein the ratio between phosphoric acid and potassium chloride of the reaction carried out in step (a) is substantially equimolar.

7. A process according to Claims 1 to 6, wherein the phosphoric acid has a concentration in the range of between 20 to 40% $P_2O_5$.

8. A process according to Claims 1 to 7, wherein the amine has between 8 to 18 carbon atoms in each chain.

9. A process according to Claims 1 to 8, wherein the amine present in the reaction of step (a), is at least equivalent to the hydrochloric acid resulted in said reaction.

10. A process according to Claims 1 to 9, wherein the ratio between the amine and inert organic solvent is between 20% to 70% by volume.

11. A process according to Claims 1 to 10, wherein a long chain alcohol is also incorporated in said organic solvent.

12. A process according to Claim 11, wherein said long chain alcohol is selected from decanol and dodecanol or mixtures thereof.

13. A process according to Claims 11 or 12, wherein the amount of the long chain alcohol is between 2% to 15% by weight of the organic solvent.

14. A process according to Claim 1, wherein the organic upper phase resulted in step (a), is reacted with a base to regenerate the amine.

15. A process according to Claim 14, wherein said base used for regeneration is calcium carbonate.

16. A process according to Claim 15, carried out at a temperature range of between 60 to 100 degrees C.

17. A process for the manufacture of monopotassium phosphate in a crystalline form, substantially as described in the specification and claimed in any of Claims 1 to 16.